# EUROPÄISCHE PATENTSCHRIFT

(11) **EP 3 164 435 B1**
(45) Veröffentlichungstag und Bekanntmachung des Hinweises auf die Patenterteilung: **23.12.2020**
(21) Anmeldenummer: 15739191.3
(22) Anmeldetag: 01.07.2015
(51) Int. Cl.: C08G 18/48, C08G 18/76, C08G 18/10, C08G 18/40, C08G 18/42, C09J 175/06, C09J 175/08

(54) **POLYURETHAN-KASCHIERKLEBSTOFF ENTHALTEND FÜLLSTOFFE**
FILLING MATERIAL CONTAINING POLYURETHANE LAMINATION ADHESIVE
COLLE POLYURÉTHANNE POUR LAMINER, CONTENANT DES MATÉRIAUX DE REMPLISSAGE

(30) Priorität: 04.07.2014 DE 102014212999
(43) Veröffentlichungstag der Anmeldung: 10.05.2017
(73) Patentinhaber: Henkel AG & Co. KGaA, 40589 Düsseldorf (DE)
(72) Erfinder: GARMANN, Helga, 40724 Hilden (DE); BANKMANN, Dennis, 40595 Düsseldorf (DE); FRANKEN, Marcel, 53819 Neunkirchen-Seelscheid (DE); GROITL, Jens, 52477 Alsdorf (DE)
(86) Internationale Anmeldenummer: PCT/EP2015/064912
(87) Internationale Veröffentlichungsnummer: WO 2016/001265

(56) Entgegenhaltungen:
- WO-A1-03/051951
- US-A1- 2005 096 411

## Beschreibung

Die vorliegende Erfindung betrifft einen Polyurethan-Klebstoff, insbesondere zum Kaschieren von Folien, wobei der PU-Klebstoff Füllstoffe enthält, sowie die Verwendung des Klebstoffs zum Verkleben von Folien, Verfahren zum Herstellen von Verbundfolien und mit dem beschriebenen Klebstoff verklebte Verbundfolien.

Kaschierklebstoffe sind in der Industrie allgemein bekannt. Es handelt sich dabei um lösemittelhaltige oder lösemittelfreie, vernetzende oder physikalisch abbindende Klebstoffe, die dazu dienen, dünne, flächige Substrate, wie beispielsweise Kunststofffolien, Metallfolien, Papier oder Kartonagen, miteinander zu verkleben. Dabei ist es wesentlich, dass durch die Verklebung die Flexibilität der dünnen einzelnen Lagen nur wenig vermindert, aber trotzdem eine ausreichende Haftung erzielt wird. Durch die Auswahl der einzelnen Folienlagen ist es möglich, bestimmte Eigenschaften dieser Mehrschichtfolien zu beeinflussen, insbesondere Durchlässigkeit für Wasser, andere Flüssigkeiten, Chemikalienbeständigkeit, Durchlässigkeit für Sauerstoff oder andere Gase.

Aus solchen Mehrschichtfolien werden beispielsweise Verpackungen für Lebensmittel in fester, pastöser oder flüssiger Form, Kunststoffbestecke, medizinische Materialien, chemische Produkte, Kosmetika, Reinigungsmittel oder Gegenstände gefertigt. Weiterhin werden solche Laminate für technische Produkte wie beispielsweise flexible Leiter, Elektroisolationsmaterialen, Segel oder Komponenten für die Photovoltaik verwendet.

Aus den oben genannten Lebensmittelanwendungsgebieten ergibt sich, dass diese Mehrschichtfolien keine Stoffe enthalten dürfen, die aus den Verpackungen in gesundheitsschädlichen Mengen in das verpackte Gut migrieren. Es ist schließlich auch wünschenswert, dass die Mehrschichtfolien ein ansprechendes optisches Erscheinungsbild haben.

Im Stand der Technik sind als Klebstoffe für solche Anwendungsgebiete insbesondere 2K-Systeme ohne Füllstoffe bekannt. Diese werden vor der Anwendung gemischt und dann in Mengen von typischerweise etwa 1-5 g/m² auf eine der zu verklebenden Folien aufgetragen. Durch das Aufkaschieren der zweiten Folie auf die mit dem Klebstoff beschichtete Seite der ersten Folie lassen sich nach der Aushärtung Verbundfolien erhalten, die als Verpackungsmaterial, insbesondere für Lebensmittel aber auch für die weiteren oben genannten Anwendungen eingesetzt werden. Derartige Klebstoffsysteme sind üblicherweise transparent und die einzelnen Komponenten gut miteinander mischbar.

US 2005/096411 A1 beschreibt Polyurethanklebstoffe für den Mauerwerkbau, die 0,5 bis 6,5 Gew.-% an CaCO₃ mit einer Teilchengröße von 0,07 bis 0,7 µm als thermischen Stabilisator aufweisen können.

WO 03/051951 A1 betrifft ein Verfahren zur Herstellung von Polyurethanprepolymeren mit endständigen Isocyanatgruppen durch stufenweise Reaktion von Polyisocyanaten mit Polyolen. Diese Zusammensetzungen können als 2K-Kaschierklebstoff verwendet werden und Füllstoffe wie CaCO₃ aufweisen.

Nachteile der bekannten Systeme liegen allerdings darin, dass mitunter durch chemische oder physikalische Unverträglichkeiten der beiden Komponenten nur eine unzureichende Mischung erreicht werden kann, was zu Problemen bei der Verklebung führt. Weitere Nachteile sind vergleichsweise hohe Kosten derartiger Systeme und dass diese im Wesentlichen aus Erdölprodukten hergestellt werden. Schließlich haben einige der bekannten Systeme niedrige Viskositäten, was dazu führt, dass sie mit Druckfarben auf den Folien interagieren und diese verschmieren, sowie tief in die Farbe eindringen, so dass für die Verklebung größere Mengen erforderlich sind.

Aufgabe der vorliegenden Erfindung war es deshalb Polyurethan-Klebstoffe zur Verfügung zu stellen, die die genannten Nachteile nicht aufweisen.

Es wurde nun überraschenderweise gefunden, dass die oben genannten Nachteile durch den Einsatz spezieller Füllstoffe in den an sich bekannten Klebstoffsystemen überwunden werden können. Die hierzu eingesetzten Füllstoffe müssen zum einen sehr kleine Partikelgrößen aufweisen, um für dünne Klebstoffschichtdicken von weniger als 5 µm, typischerweise etwa 2 µm geeignet zu sein. Zum anderen müssen sie bestimmte Eigenschaften hinsichtlich ihrer Härte und ihres Benetzungsverhaltens aufweisen. Die entsprechenden füllstoffhaltigen Klebstoffzusammensetzungen zeichnen sich dadurch aus, dass zum einen die Mischbarkeit inkompatibler Komponenten signifikant verbessert wird. Des Weiteren können durch den Einsatz solcher Füllstoff die Kosten für die Klebstoffzusammensetzungen drastisch gesenkt werden, da die Füllstoffe kostengünstiger erhältlich sind als die Rohstoffe der Klebstoffsysteme. Des Weiteren können sehr niedrig viskose Systeme durch den Einsatz von solchen Füllstoffen "gebunden" werden, so dass das Eindringen der Klebstoffe in die (bedruckten) Folien verringert wird. Die Füllstoffe sind ferner üblicherweise nicht Erdöl-basiert und daher ressourcenschonender. Schließlich wurde überraschenderweise festgestellt, dass sich durch die Verwendung von Füllstoffen die Transparenz der Klebstoffschicht kaum wahrnehmbar verringert und sich durch eine niedrigere Durchlässigkeit gegenüber hochenergetischer Strahlung ein besserer Schutz der verpackten Güter, insbesondere Lebensmitteln, gegen Lichteinwirkung erzielen lässt.

In einem ersten Aspekt betrifft die Erfindung daher eine Kaschierklebstoff-Zusammensetzung auf Polyurethanbasis, insbesondere zum Kaschieren von Folien, die bezogen auf ihr Gesamtgewicht 10 bis 50 Gew.-%, mindestens eines festen, partikulären Füllstoffs enthält, wobei
(a) mindestens 90% der Füllstoffpartikel des mindestens einen Füllstoffs eine Partikelgröße von 4 µm oder weniger aufweisen; und
(b) der mindestens eine Füllstoff eine Mohs-Härte von 3 oder weniger besitzt.

In einer bevorzugten Ausführungsform ist der mindestens eine Füllstoff in einer Menge von 10 bis 40 Gew.-% bezogen auf das Gesamtgewicht der Kaschierklebstoff-Zusammensetzung enthalten. Weiterhin bevorzugt ist der mindestens eine Füllstoff in einer Menge von 20 bis 30 Gew.-% bezogen auf das Gesamtgewicht der Kaschierklebstoff-Zusammensetzung enthalten ist.

In einem weiteren Aspekt betrifft die Erfindung ein Verfahren zur Herstellung von Verbundfolien, in dem mindestens zwei gleiche oder unterschiedliche Kunststofffolien unter Verwendung einer Kaschierklebstoff-Zusammensetzung wie hierin beschreiben verklebt werden und entsprechend hergestellte Verbundfolien.

Die Erfindung erfasst auch die Verwendung derart hergestellter Verbundfolien als Verpackung, insbesondere zur Verpackung von Arznei- oder Lebensmitteln.

In noch einem weiteren Aspekt betrifft die Erfindung die Verwendung der hierin beschriebenen Kaschierklebstoff-Zusammensetzungen zum Verkleben von Folien.

Die im vorliegenden Text angegebenen Molekulargewichte beziehen sich, soweit nicht anders angegeben, auf das Zahlenmittel des Molekulargewichts (Mn). Das Molekulargewicht Mn kann auf Basis einer Endgruppenanalyse (Hydroxylzahl gemäß DIN 53240-1:2013-06), oder durch Gelpermeationschromatographie (GPC) gemäß DIN 55672-1:2007-08 mit THF als Eluent bestimmt werden. Falls nicht anders angegeben, sind die aufgeführten Molekulargewichte solche, die mittels GPC bestimmt wurden. Das Gewichtsmittel des Molekulargewichts Mw kann ebenfalls mittels GPC, wie oben angegeben, bestimmt werden.

"Mindestens ein", bezogen auf einen Inhaltsstoff, bezieht sich die Angabe auf die Art des Inhaltsstoffs und nicht auf die absolute Zahl der Moleküle. "Mindestens ein Polyol" bedeutet somit beispielsweise mindestens eine Art von Polyol, d.h. dass eine Art von Polyol oder eine Mischung mehrerer verschiedener Polyole verwendet werden kann. Zusammen mit Gewichtsangaben bezieht sich die Angabe auf alle Verbindungen der angegebenen Art, die in der Zusammensetzung/Mischung enthalten sind, d.h. dass die Zusammensetzung über die angegebene Menge der entsprechenden Verbindungen hinaus keine weiteren Verbindungen dieser Art enthält.

Alle Prozentangaben, die im Zusammenhang mit den hierin beschriebenen Zusammensetzungen gemacht werden, beziehen sich, sofern nicht explizit anders angegeben auf Gew.-%, jeweils bezogen auf die betreffende Mischung.

"Ungefähr" oder "ca.", wie hierin im Zusammenhang mit einem Zahlenwert verwendet bezieht sich auf den Zahlenwert ±10 %, vorzugsweise ±5%.

Die eingesetzten Füllstoffe sind bei Raumtemperatur (20°C) und Normaldruck (1013 mbar) feste Partikel einer organischen oder anorganischen Verbindung oder Mischung verschiedener Verbindungen. Bei den Füllstoffen handelt es sich vorzugsweise um Salze oder Mineralien. Die eingesetzten Füllstoffe zeichnen sich dadurch aus, dass mindestens 90% der Füllstoffpartikel eine Partikelgröße von 4 µm oder weniger besitzen (x90 ≤ 4 µm). Vorzugsweise weisen mindestens 50% der Füllstoffpartikel eine Partikelgröße von 1,5 µm oder weniger auf (x50 ≤ 1,5 µm). Es ist insbesondere bevorzugt wenn mindestens 10% der Füllstoffpartikel eine Partikelgröße von 0,3 µm oder weniger besitzen (x10 ≤ 0,3 µm). Insbesondere bevorzugt sind Füllstoffe, die alle drei Kriterien erfüllen, also eine Partikelgrößenverteilung x10 ≤ 0,3 µm, x50 ≤ 1,5 µm und x90 ≤ 4 µm aufweisen. Mit x10, x50 bzw. x90 wird das 10%-Quantil (10. Perzentil), 50%-Quantil (50. Perzentil) bzw. 90%-Quantil (90. Perzentil) der Partikelgrößenverteilung bezeichnet. Beispielsweise bedeutet x90 = 4 µm, dass 90% der Partikel eine Partikelgröße von 4 µm oder weniger aufweisen und 10 % der Partikel eine Partikelgröße von mehr als 4 µm besitzen. Entsprechend bedeutet x90 ≤ 4 µm, dass mindestens 90% der Partikel eine Partikelgröße von 4 µm oder weniger aufweisen und maximal 10 % der Partikel eine Partikelgröße von mehr als 4 µm besitzen. Zur Bestimmung der Partikelgröße bzw. Partikelgrößenverteilung stehen verschiedene Methoden zur Verfügung, u.a. die Siebanalyse (nach ISO787, Teil 7), die Sedimentationsanalyse (nach DIN 66115) und die Bestimmung mittels Laserlichtbeugung gemäß der Norm ISO 13320:2009(E) (korrigierte Fassung vom 01.12.2009). Falls nicht anders angegeben erfolgt die Bestimmung gemäß der Norm ISO 13320:2009(E). Die Kalibrierung erfolgt dabei auf Basis genormter sphärischer Referenzmaterialien, sogenannter *traceable spherical certified reference materials* (CRMs) bekannter Partikelgrößenverteilung. Die Partikelgröße des sphärischen Referenzmaterials bezieht sich auf den Partikeldurchmesser des sphärischen Referenzmaterials. Die Angabe der Quantile in Prozent (%) bezieht sich gemäß der Norm ISO 13320:2009(E) auf Volumenanteile (Vol.-%).

Des Weiteren ist es bevorzugt, dass die Füllstoffe als im Wesentlichen sphärische Partikel, d.h. insbesondere nicht als Plättchen oder Nadeln/Fasern vorliegen. In verschiedenen Ausführungsformen sind die Füllstoffe daher keine Schichtsilikate oder vergleichbare Mineralien. Es ist bevorzugt, dass die Füllstoffe als Körner oder Kristallite, insbesondere mit annähernd sphärischer Form, d.h. einem Aspektverhältnis von ca. 1:1, vorliegen.

Die Partikelgröße ist im Hinblick auf die Schichtdicke der Klebstoffschicht von Bedeutung. Da in Verbundfolien die typischen Klebstoffschichten Dicken im Bereich von nur 1 bis 5 µm aufweisen, ist es wichtig, dass die Füllstoffe Partikelgrößen aufweisen die mit derart geringen Dicken kompatibel sind, d.h. mittlere Partikelgrößen aufweisen, welche diese Dicken nicht überschreiten. Üblicherweise im Stand der Technik eingesetzt Füllstoffe haben häufig mittlere Partikelgrößen von 25 µm und mehr und sind daher für die beschriebenen Kaschierklebstoffe nicht geeignet. Aus Kostengründen sowie im Hinblick auf etwaige, noch nicht aufgeklärte Gesundheitsgefährdungen und die Beeinflussung der Viskosität sind wiederum Nanopartikel weniger geeignet. Es wird daher erfindungsgemäß bevorzugt, dass die Füllstoffe keine Nanopartikel sind oder solche nicht in über dem in natürlichem Maße vorkommenden Gehalt enthalten. Es ist daher bevorzugt, dass die Zusammensetzung einen Füllstoff enthält, der einen Gehalt an Füllstoffpartikeln mit einer Partikelgröße ≤ 0,1 µm von maximal 5% bezogen auf den Füllstoff aufweist. Der mindestens eine Füllstoff hat also vorzugsweise eine Partikelgrößenverteilung von x5 ≥ 0,1 µm. Insbesondere bevorzugt ist es daher, dass der mindestens eine Füllstoff eine Partikelgrößenverteilung x10 ≤ 0,3 µm, x50 ≤ 1,5 µm, x90 ≤ 4 µm und x5 ≥ 0,1 µm aufweist.

Die eingesetzten Füllstoffe weisen eine Mohs-Härte von 3 oder weniger auf. Dadurch wird sichergestellt, dass die füllstoffhaltigen Klebstoffzusammensetzungen mit den üblicherweise eingesetzten Kaschieranlagen kompatibel sind. Größere Härten sind im Hinblick auf die Abrasivität nachteilig, da sie zu Schäden an den in den üblichen Laminierverfahren eingesetzten Rollen/Walzen führen können.

Die Mohs-Härte wird durch den Vergleich von einem gegebenen Stoff mit einem Referenzmineral bestimmt, dem in einer Ordinalskala (Mohs-Skala) ein Zahlenwert von 1 bis 10 zugeordnet ist. Die Skalierung folgt der Tatsache, dass weichere Mineralien durch härtere geritzt werden können, aber nicht umgekehrt. Die Härteunterschiede zwischen den einzelnen Referenzmineralen sind nicht linear. Die Referenzmineralien sind Talk mit einer Mohshärte von 1, Gips mit einer Mohshärte von 2, Calcit mit einer Härte von 3, Fluorit mit einer Härte von 4, Apatit mit einer Härte von 5, Feldspat mit einer Härte von 6, Quarz mit einer Härte von 7, Topas mit einer Härte von 8, Korund mit einer Härte von 9 und Diamant mit einer Härte von 10. Bei der Bestimmung der Härte eines gegebenen Stoffs wird dieser zum Ritzen verschiedener Referenzmineralien mit aufsteigender Härte verwendet, bis keine Ritzung der Referenzmaterialien mehr möglich ist. Dem Stoff wird dann die Härte des Referenzmaterials zugeordnet, die nicht mehr geritzt werden konnte.

In verschiedenen Ausführungsformen weist der Füllstoff eine Ölzahl von 50 oder weniger, vorzugsweise 40 oder weniger auf, noch bevorzugter 25 oder weniger. Die Ölzahl kann mittels DIN EN ISO 787-5:1995-10 bestimmt werden. Die Ölzahl, auch Öladsorption oder OZ genannt, gibt diejenige Menge an tropfenweise zugegebenem Leinöl (festgelegter Qualität, Säurezahl ca. 2,8 mg KOH/g) an, die eine bestimmte Menge Füllstoff beim Kneten mit einem Spatel auf einer Glasplatte bis zum Netzpunkt adsorbiert. Die Ölzahl ist ein Maß für die Systemkompatibilität, wobei eine niedrige Ölzahl eine bessere Kompatibilität mit dem verwendeten Klebstoffsystem bedeutet.

Erfindungsgemäß geeignete Füllstoffe schließen ein, ohne darauf beschränkt zu sein, Calciumcarbonat, Calciumsulfat, Dolomit (CaMg(CO₃)₂) und Mischungen der vorgenannten Besonders bevorzugt ist Calciumcarbonat. Es wurde überraschenderweise in Tests zur Bestimmung von Migraten gefunden, dass die hierin beschriebenen Systeme, die Calciumcarbonat enthalten, im Vergleich zu ansonsten identischen Systemen mit anderen Füllstoffen, wie beispielsweise Talk, oder im Vergleich zu ansonsten identischen Systemen ohne Füllstoffe weniger primäre aromatische Amine (PAA) freisetzen. Solche PAA entstehen bei der Aushärtung von Polyurethanen aus freien Polyisocyanaten, die unter der Einwirkung von Feuchtigkeit zu den entsprechenden Aminen abreagieren. Da PAA als gesundheitsschädlich gelten, ist es wünschenswert, deren Entstehung bzw. deren Migration in das verpackte Gut zu verringern oder zu verhindern. Im weiteren Verlauf der Aushärtung reagieren die zwischenzeitlich gebildeten PAA mit Isocyanatüberschuss zwar ab, je mehr PAA in der Zwischenstufe aber gebildet werden, umso länger dauert die Zeit zur Erreichung eines im Wesentlichen ,migratfreien' Verbundes.

Des Weiteren hat sich überraschenderweise gezeigt, dass sich durch die Verwendung von Füllstoffen trotz der Zugabe dieser nichtreaktiven Komponente die Verbundhaftung ausgewählter Systeme nicht abnimmt, sondern in einigen Fällen sogar zunimmt. Das bedeutet, dass sich durch den Einsatz von Füllstoffen die Leistung der Klebstoffe verbessern lässt. Auch die mechanischen Eigenschaften können verbessert werden. So wurde gefunden, dass Calciumcarbonat die Spannung von Klebstoffsystemen bei gleichbleibenden Dehnungen steigern kann.

Polyurethan-Klebstoffe sind allgemein bekannt. Diese werden auch zum Kaschieren von Mehrschichtfolien eingesetzt. Bei den erfindungsgemäß geeigneten Klebstoffen handelt es sich um 1K-Polyurethan-Klebstoffe oder 2K-Polyurethan-Klebstoffe. Die Klebstoffe können flüssig sein, es kann sich jedoch auch Schmelzklebstoffe handeln. Die Klebstoffe können Lösemittel enthalten, bevorzugt sind sie jedoch frei von Lösemitteln. Die Vernetzung der erfindungsgemäßen geeigneten Polyurethan-Klebstoffe beruht auf der Umsetzung von reaktiven NCO-Gruppen mit H-aciden funktionellen Gruppen, beispielsweise OH-Gruppen, Aminogruppen oder Carboxylgruppen. Eine alternative Vernetzungsmethode besteht darin, dass die NCO-Gruppen mit Feuchtigkeit aus dem aufgetragenen Klebstoff, dem Substrat, oder der Umgebung reagieren unter Bildung von Harnstoffgruppen. Diese Vernetzungsreaktionen sind bekannt, sie können auch nebeneinander ablaufen. Zur Beschleunigung solcher Reaktionen können Katalysatoren in den Klebstoff eingebracht werden, beispielsweise Amin-, Titan- oder Zinnkatalysatoren.

In bevorzugten Ausführungsformen ist der Klebstoff ein 2K-Polyurethan-Klebstoff. Ein solcher kann als Harzkomponente mindestens ein NCO-reaktives, insbesondere Hydroxy-terminiertes Polyurethanpräpolymer und als Härterkomponente mindestens ein Polyisocyanat enthalten, oder als Harzkomponente mindestens ein NCO-terminiertes Polyurethanpräpolymer und als Härterkomponente mindestens ein Polyol enthalten. Erfindungsgemäß sind letztere Systeme besonders bevorzugt.

In derartigen 2K-Systemen kann der Füllstoff entweder in der Harzkomponente oder der Härterkomponente oder auch beiden enthalten sein, ist aber insbesondere in der Härterkomponente enthalten. Dabei kann die Harzkomponente dann frei von Füllstoffen sein.

Die Isocyanat (NCO)-terminierten PU-Präpolymere der Harzkomponente werden durch Umsetzen eines Polyols oder einer Polyolmischung mit einem stöchiometrischen Überschuss von Polyisocyanat erhalten. Die bei der Herstellung des Präpolymers eingesetzten Polyole können alle üblicherweise für die Polyurethansynthese eingesetzten Polyole, beispielsweise Polyole, Polyesterpolyole, Polyetherpolyole, Polyesteretherpolyole, Polycarbonatpolyole oder Mischungen von zwei oder mehr der genannten sein.

Polyetherpolyole können aus einer Vielzahl von Alkoholen hergestellt werden, die eine oder mehrere, primäre oder sekundäre Alkoholgruppen enthalten. Als Starter für die Herstellung der keine tertiären Aminogruppen enthaltenden Polyether können beispielsweise folgende Verbindungen oder Mischungen dieser Verbindungen eingesetzt werden: Wasser, Ethylenglykol, Propylenglykol, Glycerin, Butandiol, Butantriol, Trimethylolethan, Pentaerythrit, Hexandiol, 3-Hydroxyphenol, Hexantriol, Trimethylolpropan, Oktandiol, Neopentylglykol, 1,4-Hydroxymethylcyclohexan, Bis(4-hydroxyphenyl)dimethylmethane und Sorbit. Bevorzugt werden Ethylenglykol, Propylenglykol, Glycerin und Trimethylolpropan eingesetzt, besonders bevorzugt Ethylenglykol und Propylenglykol, und in einer besonders bevorzugten Ausführungsform wird Propylenglykol eingesetzt.

Als cyclische Ether zur Herstellung von vorstehend beschriebenen Polyethern kommen Alkylenoxide wie Ethylenoxid, Propylenoxid, Butylenoxid, Epichlorhydrin, Styroloxid oder Tetrahydrofuran oder Gemische aus diesen Alkylenoxiden in Betracht. Bevorzugt werden Propylenoxid, Ethylenoxid oder Tetrahydrofuran oder Gemische aus diesen verwendet. Besonders bevorzugt wird Propylenoxid oder Ethylenoxid oder Gemische aus diesen verwendet. Ganz besonders bevorzugt wird Propylenoxid verwendet.

Polyesterpolyole können beispielsweise durch Umsetzung von niedermolekularen Alkoholen, insbesondere von Ethylenglykol, Diethylenglykol, Neopentylglykol, Hexandiol, Butandiol, Propylenglykol, Glycerin oder Trimethylolpropan mit Caprolacton hergestellt werden. Ebenfalls als polyfunktionelle Alkohole zur Herstellung von Polyesterpolyolen geeignet sind 1,4-Hydroxymethylcyclohexan, 2-Methyl-1,3-propandiol, 1,2,4-Butantriol, Triethylenglykol, Tetraethylenglykol, Polyethylenglykol, Dipropylenglykol, Polypropylenglykol, Dibutylenglykol und Polybutylenglykol.

Weitere geeignete Polyesterpolyole sind durch Polykondensation herstellbar. So können difunktionelle und/oder trifunktionelle Alkohole mit einem Unterschuss an Dicarbonsäuren oder Tricarbonsäuren oder Gemischen aus Dicarbonsäuren oder Tricarbonsäuren, oder deren reaktiven Derivaten, zu Polyesterpolyolen kondensiert werden. Geeignete Dicarbonsäuren sind beispielsweise Adipinsäure oder Bernsteinsäure und ihre höhere Homologen mit bis zu 16 C-Atomen, ferner ungesättigte Dicarbonsäuren wie Maleinsäure oder Fumarsäure sowie aromatische Dicarbonsäuren, insbesondere die isomeren Phthalsäuren, wie Phthalsäure, Isophthalsäure oder Terephthalsäure. Als Tricarbonsäuren sind beispielsweise Zitronensäure oder Trimellithsäure geeignet. Die genannten Säuren können einzeln oder als Gemische aus zwei oder mehr davon eingesetzt werden. Besonders geeignete Alkohole sind Hexandiol, Butandiol, Ethylenglykol, Diethylenglykol, Neopentylglykol, 3-Hydroxy-2,2-dimethylpropyl-3-hydroxy-2,2-dimethylpropanoat oder Trimethylolpropan oder Gemische aus zwei oder mehr davon. Besonders geeignete Säuren sind Phthalsäure, Isophthalsäure, Terephthalsäure, Adipinsäure oder Dodekandisäure oder deren Gemische. Polyesterpolyole mit hohem Molekulargewicht umfassen beispielsweise die Umsetzungsprodukte von polyfunktionellen, bevorzugt difunktionellen Alkoholen (gegebenenfalls zusammen mit geringen Mengen an trifunktionellen Alkoholen) und polyfunktionellen, bevorzugt difunktionellen Carbonsäuren. Anstatt freier Polycarbonsäuren können (wenn möglich) auch die entsprechenden Polycarbonsäureanhydride oder entsprechende Polycarbonsäureester mit Alkoholen mit bevorzugt 1 bis 3 C- Atomen eingesetzt werden. Die Polycarbonsäuren können aliphatisch, cycloaliphatisch, aromatisch oder heterocyclisch oder beides sein. Sie können gegebenenfalls substituiert sein, beispielsweise durch Alkylgruppen, Alkenylgruppen, Ethergruppen oder Halogene. Als Polycarbonsäuren sind beispielsweise Bernsteinsäure, Adipinsäure, Korksäure, Azelainsäure, Sebacinsäure, Dodekandisäure, Phthalsäure, Isophthalsäure, Terephthalsäure, Trimellithsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, Dimerfettsäure oder Trimerfettsäure oder Gemische aus zwei oder mehr davon geeignet.

Aus Lactonen, beispielsweise auf Basis von epsilon-Caprolacton, auch "Polycaprolactone" genannt, oder Hydroxycarbonsäuren, beispielsweise omega-Hydroxycapronsäure, erhältliche Polyester, können ebenfalls eingesetzt werden.

Es können aber auch Polyesterpolyole oleochemischer Herkunft verwendet werden. Derartige Polyesterpolyole können beispielsweise durch vollständige Ringöffnung von epoxidierten Triglyceriden eines wenigstens teilweise olefinisch ungesättigte Fettsäureenthaltenden Fettgemisches mit einem oder mehreren Alkoholen mit 1 bis 12 C-Atomen und anschließender partieller Umesterung der Triglycerid-Derivate zu Alkylesterpolyolen mit 1 bis 12 C-Atomen im Alkylrest hergestellt werden.

Polycarbonatpolyole können beispielsweise durch die Reaktion von Diolen, wie Propylenglykol, Butandiol-1,4 oder Hexandiol-1,6, Diethylenglykol, Triethylenglykol oder Tetraethylenglykol oder Gemischen dieser Diole mit Diarylcarbonaten, beispielsweise Diphenylcarbonaten, oder Phosgen, erhalten werden.

Das Molekulargewicht der zur Synthese des Präpolymers verwendeten Polyole liegt vorzugsweise im Bereich von 100 bis 20000 g/mol, insbesondere 330 bis 4500 g/mol. Die mittlere Funktionalität kann im Bereich von 2 bis 4,5 liegen. Das PU-Präpolymer weist vorzugsweise ein Polyether/Polyester-Backbone auf.

Der stöchiometrische Überschuss von Polyisocyanat beträgt bezogen auf das molare Verhältnis von NCO- zu OH-Gruppen insbesondere 1:1 bis 1,8:1, vorzugsweise 1:1 bis 1,6:1 und besonders bevorzugt 1,05:1 bis 1,5:1.

Es können die bekannten Lack- oder Klebstoff-Polyisocyanate eingesetzt werden, wobei es sich um Polyisocyanate mit zwei oder mehr Isocyanat-Gruppen handelt. Geeignete Polyisocyanate sind beispielsweise 1,5-Naphthylendiisocyanat (NDI), 2,4- oder 4,4'-Diphenylmethandiisocyanat (MDI), hydriertes MDI (H12MDI), Xylylendiisocyanat (XDI), Tetramethylxylylendiisocyanat (TMXDI), Di- und Tetraalkylendiphenylmethandiisocyanat, 4,4'-Dibenzyldiisocyanat, 1,3- oder 1,4-Phenylendiisocyanat, Toluylendiisocyanats (TDI), 1-Methyl-2,4-diisocyanato-cyclohexan, 1,6-Diisocyanato-2,2,4-trimethylhexan, 1,6-Diisocyanato-2,4,4-trimethylhexan, 1-lsocyanatomethyl-3-isocyanato-1,5,5-trimethylcyclohexan (IPDI), Tetramethoxybutan-1,4-diisocyanat, Butan-1,4-diisocyanat, Hexan-1,6-diisocyanat (HDI), Dicyclohexylmethandiisocyanat, Cyclohexan-1,4-diisocyanat, Ethylen-diisocyanat, Methylentriphenyltriisocyanat (MIT), Phthalsäure-bis-isocyanatoethylester, Trimethylhexamethylendiisocyanat, 1,4-Diisocyanatobutan, 1,12-Diisocyanatododecan und Dimerfettsäurediisocyanat.

Als mindestens trifunktionelle Isocyanate geeignet sind Polyisocyanate, die durch Trimerisation oder Oligomerisation von Diisocyanaten oder durch Reaktion von Diisocyanaten mit niedermolekularen, polyfunktionellen hydroxyl- oder aminogruppenhaltigen Verbindungen entstehen. Kommerzielle erhältliche Beispiele sind Trimerisierungsprodukte der Isocyanate HDI, MDI oder IPDI oder Addukte aus Diisocyanaten und niedermolekularen Triolen, wie Trimethylolpropan oder Glycerin. Weitere Beispiele sind Isocyanurate des Hexamethylendiisocyanates (HDI) und Isocyanurate des Isophorondiisocyanats (IPDI).

Es können im Prinzip aliphatische, cycloaliphatische oder aromatische Isocyanate eingesetzt werden, insbesondere sind jedoch aromatische Diisocyanate geeignet. Beispiele für geeignete Diisocyanate sind Methylendiphenyldiisocyanate (MDI), wie 4,4-Methylendiphenyldiisocyanat, 2,4-Methylendiphenyldiisocyanat oder 2,2-Methylendiphenyldiisocyanat. Die erfindungsgemäßen PU-Klebstoffe können die Isocyanate umgesetzt als PU-Präpolymere enthalten oder sie enthalten zumindest anteilig niedermolekulare, ggf. oligomere, Isocyanate.

Aus den oben erwähnten Polyolen und den Polyisocyanaten können auf bekannte Art und Weise PU-Präpolymere hergestellt werden. Dabei kann aus den Polyolen und den Isocyanaten ein NCO-Gruppen-haltiges Präpolymer hergestellt werden. Beispiele dafür sind in der EP-A951493, EP-A1341832, EP-A 150444, EP-A 1456265, WO 2005/097861 beschrieben.

Das mindestens eine NCO-terminierte PU-Präpolymer ist vorzugsweise ein aromatisches Isocyanat-terminiertes, noch bevorzugter MDI-terminiertes Polyurethan-Präpolymer aus einer Polyether-/Polyesterpolyolmischung und einem aromatischen Diisocyanat, wie MDI.

Die entsprechenden Präpolymere weisen üblicherweise einen NCO-Gehalt von 5-20 Gew.-% (bestimmt nach Spiegelberger, DIN EN ISO 11909:2007-05) auf und haben eine mittlere NCO-Funktionalität von 2 bis 3.

Aufgrund des eingesetzten Überschusses an Isocyanat, enthalten die NCO-terminierten PU-Präpolymere üblicherweise gewisse Mengen an Isocyanat-Monomeren, d.h. insbesondere aromatischen Polyisocyanat-Monomeren, wie beispielsweise MDI, typischerweise in Mengen von 0,1 bis 25 Gew.-% bezogen auf das Gesamtgewicht von Präpolymeren und Monomeren.

Das Molekulargewicht (Mn) des Präpolymers liegt im Bereich von 1500 g/mol bis 100 000 g/mol, insbesondere bevorzugt von 2000 g/mol bis 50 000 g/mol.

In dem erfindungsgemäßen Bindemittel-System, ist neben der Harzkomponente eine Härterkomponente enthalten. Die Härterkomponente enthält insbesondere ein oder mehrere Polyole.

Geeignete Polyole sind aliphatische und/oder aromatische Alkohole mit 2 bis 6, vorzugsweise 2 bis 4, OH-Gruppen pro Molekül. Die OH-Gruppen können sowohl primär als auch sekundär sein.

Zu den geeigneten aliphatischen Alkoholen zählen beispielsweise Ethylenglykol, Propylenglykol, Butandiol-1,4, Pentandiol-1,5, Hexandiol-1,6, Heptandiol-1,7, Octandiol-1,8 und deren höhere Homologen oder Isomeren. Ebenfalls geeignet sind höher funktionelle Alkohole wie beispielsweise Glycerin, Trimethylolpropan, Pentaerythrit sowie oligomere Ether der genannten Substanzen.

Bevorzugt werden als Polyolkomponente Umsetzungsprodukte niedermolekularer polyfunktioneller Alkohole mit Alkylenoxiden, eingesetzt. Die Alkylenoxide weisen vorzugsweise 2 bis 4 C-Atome auf. Geeignet sind beispielsweise die Umsetzungsprodukte von Ethylenglykol, Propylenglykol, den isomeren Butandiolen, Hexandiolen oder 4,4'-Dihydroxy-diphenylpropan mit Ethylenoxid, Propylenoxid oder Butylenoxid, oder Gemischen aus zwei oder mehr davon. Ferner sind auch die Umsetzungsprodukte polyfunktioneller Alkohole, wie Glycerin, Trimethylolethan oder Trimethylolpropan, Pentaerythrit oder Zuckeralkohole, oder Gemischen aus zwei oder mehr davon, mit den genannten Alkylenoxiden zu Polyetherpolyolen geeignet. Weitere, im Rahmen der Erfindung gebräuchliche Polyole, entstehen durch Polymerisation von Tetrahydrofuran (Poly-THF).

Ebenfalls zum Einsatz als Polyolkomponente geeignet sind Polyether, die durch Vinylpolymere modifiziert wurden. Derartige Produkte sind beispielsweise erhältlich, indem Styrol- oder Acrylnitril, oder deren Gemisch, in der Gegenwart von Polyethern polymerisiert werden.

Weiter geeignete Polyole sind Polyesterpolyole.

Beispiele dafür sind Polyesterpolyole, die durch Umsetzung von niedermolekularen Alkoholen, insbesondere von Ethylenglykol, Diethylenglykol, Neopentylglykol, Hexandiol, Butandiol, Propylenglykol, Glycerin oder Trimethylolpropan mit Caprolacton entstehen.

Weitere geeignete Polyesterpolyole sind durch Polykondensation herstellbar. Derartige Polyesterpolyole umfassen bevorzugt die Umsetzungsprodukte von polyfunktionellen, vorzugsweise difunktionellen Alkoholen und polyfunktionellen, vorzugsweise difunktionellen und/oder trifunktionellen Carbonsäuren oder Polycarbonsäureanhydriden. Zur Herstellung derartiger Polyesterpolyole geeignet sind insbesondere Hexandiol, 1,4-Hydroxymethylcyclohexan, 2-Methyl-1,3-propandiol, Butantriol-1,2,4, Triethylenglykol, Tetraethylenglykol, Ethylenglykol, Polyethylenglykol, Dipropylenglykol, Polypropylenglykol, Dibutylenglykol und Polybutylenglykol. Es können auch Anteile an trifunktionellen Alkoholen zugesetzt werden.

Die Polycarbonsäuren können, aliphatisch, cycloaliphatisch, aromatisch oder heterocyclisch oder beides sein. Sie können gegebenenfalls substituiert sein, beispielsweise durch Alkylgruppen, Alkenylgruppen, Ethergruppen oder Halogene. Als Polycarbonsäuren sind beispielsweise Bernsteinsäure, Adipinsäure, Korksäure, Azelainsäure, Sebacinsäure, Phthalsäure, Isophthalsäure, Terephthalsäure, Trimellithsäure, Phthalsäureanhydrid, Tetrahydrophthalsäureanhydrid, Hexahydrophthalsäureanhydrid, Glutarsäureanhydrid, Maleinsäure, Maleinsäureanhydrid, Fumarsäure, Dimerfettsäure oder Trimerfettsäure oder Gemische aus zwei oder mehr davon geeignet. Gegebenenfalls können auch Anteile an Tricarbonsäuren zugesetzt werden.

Es können aber auch Polyesterpolyole oleochemischer Herkunft verwendet werden. Derartige Polyesterpolyole können beispielsweise durch vollständige Ringöffnung von epoxidierten Triglyceriden eines wenigstens teilweise olefinisch ungesättigte Fettsäure-enthaltenden Fettgemisches mit einem oder mehreren Alkoholen mit 1 bis 12 C-Atomen und anschließender partieller Umesterung der Triglycerid-Derivate zu Alkylesterpolyolen mit 1 bis 12 C-Atomen im Alkylrest hergestellt werden. Weitere geeignete Polyole sind Polycarbonat-Polyole und Dimerdiole (Fa. Henkel) sowie Rizinusöl und dessen Derivate. Auch die Hydroxy-funktionellen Polybutadiene, wie sie z.B. unter dem Handelsnamen Poly-bd® erhältlich sind, können für die erfindungsgemäßen Zusammensetzungen als Polyole eingesetzt werden.

Ebenfalls als Polyolkomponente geeignet sind Polyacetale. Unter Polyacetalen werden Verbindungen verstanden, wie sie aus Glykolen, beispielsweise Diethylenglykol oder Hexandiol oder deren Gemisch mit Formaldehyd erhältlich sind. Im Rahmen der Erfindung einsetzbare Polyacetale können ebenfalls durch die Polymerisation cyclischer Acetale erhalten werden. Weiterhin als Polyole geeignet sind Polycarbonate. Polycarbonate können beispielsweise durch die Reaktion von Diolen, wie Propylenglykol, Butandiol-1,4 oder Hexandiol-1,6, Diethylenglykol, Triethylenglykol oder Tetraethylenglykol oder Gemischen aus zwei oder mehr davon mit Diarylcarbonaten, beispielsweise Diphenylcarbonat, oder Phosgen, erhalten werden. Ebenfalls geeignet sind Hydroxyester von Polylactonen.

Eine weitere Gruppe von Polyolen können OH-funktionelle Polyurethanpolyole, beispielsweise OHterminierte Polyurethanpräpolymere, sein.

Ebenfalls als Polyolkomponente geeignet sind OH-Gruppen tragende Polyacrylate. Diese Polyacrylate sind beispielsweise erhältlich durch die Polymerisation von ethylenisch ungesättigten Monomeren, die eine OH-Gruppe tragen. Hierzu geeignete ethylenisch ungesättigte Carbonsäuren sind beispielsweise Acrylsäure, Methacrylsäure, Crotonsäure oder Maleinsäure oder deren Ester mit C1 bis C2-Alkoholen. Entsprechende OH-Gruppen tragende Ester sind beispielsweise 2-Hydroxyethylacrylat, 2-Hydroxyethylmethacrylat, 2-Hydroxypropylacrylat, 2-Hydroxypropylacrylat, 2-Hydroxypropylmethacrylat, 3-Hydroxypropylacrylat oder 3-Hydroxypropylmethacrylat oder Gemische aus zwei oder mehr davon.

Das hierin beschriebene Bindemittel-System kann in verschiedenen Ausführungsformen ferner mindestens einen Katalysator enthalten, insbesondere ausgewählt aus Metallkatalysatoren auf Basis von Sn oder Ti oder Aminkatalysatoren. Geeignete Katalysatoren sind im Stand der Technik bekannt. Der Katalysator ist vorzugsweise in der Härterkomponente, d.h. in den erfindungsgemäß bevorzugten Systemen in der Hydroxy-funktionalisierten Komponente, enthalten.

Weiterhin können in dem erfindungsgemäßen Klebstoff die üblichen Additive enthalten sein. Bei den weiteren Bestandteilen handelt es sich beispielsweise um Harze (Tackifier), Stabilisatoren, Vernetzungsmittel oder Viskositätsregler, Pigmente, Weichmacher oder Antioxidantien.

Die erfindungsgemäßen Polyurethan-Klebstoffe sind bei Applikationstemperaturen flüssig, entweder bei Raumtemperatur oder als Schmelzklebstoff. Es ist bevorzugt, dass die erfindungsgemäßen PU-Klebstoffe bei Raumtemperatur flüssig sind. Die hierin beschriebenen Zusammensetzungen haben, in verschiedenen Ausführungsformen, bei einer Temperatur von 40°C eine Viskosität von 500 bis 100.000, insbesondere 1000 bis 20000 mPas bestimmt nach DIN ISO 2555 (Brookfield-Viskosimeter RVT, Spindel Nr. 4, 25°C; 5 UpM).

Die hierin beschriebenen Klebstoffe können Lösemittel enthalten oder lösemittelfrei sein. Als Lösemittel sind grundsätzlich alle dem Fachmann bekannte Lösemittel verwendbar, insbesondere Ester, Ketone, halogenierte Kohlenwasserstoffe, Alkane, Alkene und aromatische Kohlenwasserstoffe. Beispiele für solche Lösemittel sind Methylenchlorid, Trichlorethylen, Toluol, Xylol, Butylacetat, Amylacetat, Isobutylacetat, Methylisobutylketon, Methoxybutylacetat, Cyclohexan, Cyclohexanon, Dichlorbenzol, Diethylketon, Di-isobutylketon, Dioxan, Ethylacetat, Ethylenglykolmonobutyletheracetat, Ethylenglykolmonoethylacetat, 2-Ethylhexylacetat, Glykoldiacetat, Heptan, Hexan, Isobutylacetat, Isooctan, Isopropylacetat, Methylethylketon, Tetrahydrofuran oder Tetrachlorethylen oder Mischungen aus zwei oder mehr der genannten Lösemittel.

Die Klebstoffe werden mit üblichen Aggregaten und mit allen gängigen Auftragsverfahren auf die zu verklebenden Substrate, insbesondere Folien, aufgetragen, beispielsweise durch Sprühen, Rakeln, 3-4-Walzenauftragswerke im Falle der Anwendung eines lösemittelfreien Systems oder 2-Walzenauftragswerke im Falle der Anwendung eines lösemittelhaltigen Systems. Nach der Aufbringungen werden die zu verklebenden Substrate auf bekannte Art und Weise miteinander verklebt. Dabei ist es zweckmäßig, ggf. erhöhte Temperaturen anzuwenden, um eine bessere Applikation und schnellere Vernetzungsreaktion zu erzielen. Die erfindungsgemäßen Klebstoffe zeigen aber bereits bei Raumtemperatur oder nur gering erhöhten Temperaturen, wie 40°C, eine sehr gute Aushärtung.

Die erfindungsgemäßen Polyurethan-Klebstoffe sind insbesondere als Kaschierklebstoffe für Folien geeignet. Sie können in einem Verfahren eingesetzt werden, bei dem bekannte Folien auf Basis von Polymeren, wie PP, PE, OPA, Polyamid, TET, Polyester, Metallfolien miteinander verklebt werden. Dabei wird der erfindungsgemäße Klebstoff auf eine ggf. vorbehandelte oder bedruckte Folie aufgetragen. Die Auftragungsmenge beträgt dabei üblicherweise 1-5 g/m². Das kann bei erhöhter Temperatur stattfinden, um eine dünne und gleichmäßige Beschichtung zu erzielen. Unter Druck wird dann eine zweite Folie aus gleichem oder anderen Material aufkaschiert. Es kann erwärmt werden, der Klebstoff vernetzt und es entsteht eine Mehrschichtfolie. Diese kann ggf. auch aus mehr als zwei Schichten bestehen.

Üblicherweise werden die Folien nach der Herstellung gelagert. Während dieser Zeit ist es möglich, dass sich die erfindungsgemäßen Klebstoffe weiter vernetzen.

Durch die Verwendung der erfindungsgemäßen flüssigen oder Schmelzklebstoffe als Kaschierkleber ist es möglich, kaschierte zwei- oder Mehrschicht-Folien zu erhalten, die den hohen Anforderungen an eine Eignung für Lebensmittel- oder medizinische Verpackungen genügen.

Alle hierin im Zusammenhang mit dem PU-Klebstoff offenbarten Ausführungsformen sind natürlich auch auf die beschriebenen Verwendungen und Verfahren anwendbar und umgekehrt.

Nachfolgend soll die Erfindung an einigen exemplarischen Beispielen näher erläutert werden. Dabei sind die angegeben Mengen Gewichtsprozent, falls nicht anders angegeben.

### Beispiele

### Beispiel 1 (erfindungsgemäß)

### Harzbasis:

NCO-terminiertes MDI-Präpolymer mit einem NCO-Gehalt von 10-15 Gew.-%.

### Härter:

30 Gew.-% trifunktionelles Polypropylenglykol (PPG) mit Mw=1000 g/mol; 5 Gew.-% trifunktionelles PPG mit Mw=450 g/mol; 5 Gew.-% Dipropylenglykol; 60 Gew.-% Calciumcarbonat (x5 ≥ 0,1 µm, x10 ≤ 0,3 µm, x50 ≤ 1,5 µm und x90 ≤ 4 µm).

Mischverhältnis Harz:Härter 100:120 Gewichtsteile
Füllstoffgehalt in der Mischung: 27 Gew.-%

### Beispiel 2 (erfindungsgemäß)

### Harzbasis:

NCO-terminiertes MDI-Präpolymer mit einem NCO-Gehalt von 10-15 Gew.-%.

### Härter:

20 Gew.-% trifunktionelles Polypropylenglykol (PPG) mit Mw=1000 g/mol; 20 Gew.-% difunktioneller Polyester mit Mw=2000 g/mol; 5 Gew.-% trifunktionelles PPG mit Mw=450 g/mol; 5 Gew.-% Dipropylenglykol; 50 Gew.-% Calciumcarbonat (x5 ≥ 0,1 µm, x10 ≤ 0,3 µm, x50 ≤ 1,5 µm und x90 ≤ 4 µm).

Mischverhältnis Harz:Härter 100:100 Gewichtsteile
Füllstoffgehalt in der Mischung: 25 Gew.-%

### Beispiel 3 (Vergleichsbeispiel)

### Harzbasis:

NCO-terminiertes MDI-Präpolymer mit einem NCO-Gehalt von 10-15 Gew.-%.

Härter: 30 Gew.-% trifunktionelles Polypropylenglykol (PPG) mit Mw=1000 g/mol; 30 Gew.-% difunktioneller Polyester mit Mw=2000 g/mol; 5 Gew.-% trifunktionelles PPG mit Mw=450 g/mol; 5 Gew.-% Dipropylenglykol; 30 Gew.-% Calciumcarbonat (x50 = 4,9 µm und x90 = 25 µm).

Mischverhältnis Harz:Härter 100:100 Gewichtsteile
Füllstoffgehalt in der Mischung: 15 Gew.-%

### Beispiel 4 (Vergleichsbeispiel)

### Harzbasis:

NCO-terminiertes MDI-Präpolymer mit einem NCO-Gehalt von 10-15 Gew.-%.

Härter: 80 Gew.-% trifunktionelles Polypropylenglykol (PPG) mit Mw=1000 g/mol; 10 Gew.-% trifunktionelles PPG mit Mw=450 g/mol; 10 Gew.-% Dipropylenglykol;

Mischverhältnis Harz:Härter 100:50 Gewichtsteile
Füllstoffgehalt in der Mischung: 0 Gew.-%

### Verbundfolie:

Die Herstellung der Verbundfolien erfolgt mit Hilfe eines Laminiergeräts des Typs Super Combi 2000. Dabei wird die Klebstoffzusammensetzung in einer Menge von 2 g/m² auf eine der zu verklebenden Folien (OPA bzw. metOPP) aufgetragen und diese Folie dann mit der zweiten Folie (PE bzw. OPP) unter Druck kaschiert. Der wirkende Walzendruck des Kaschierwerks entspricht dabei einer Kraft von bis zu 200 N (20 kg).

### Verbundhaftung:

Die Bestimmung der Verbundhaftung erfolgt in Anlehnung an die Norm DIN 53357 nach 14 Tagen Härtung bei Raumtemperatur mittels einer Zugprüfmaschine der Firma Instron (Instron 4301). Dazu werden Probestreifen der Verbundfolie (Probenbreite von 15 mm) zwischen Klemmbacken eingespannt und diese dann bei einer Abzugsgeschwindigkeit von 100 m/min, einem Abzugswinkel von 90° und einer Abzugslänge von 5 bis 10 cm auseinandergezogen. Es wird der Mittelwert einer Dreifachbestimmung der maximalen aufzubringenden Kraft bezogen auf die Probenbreite von 15 mm angegeben.

### Reißdehnung und Reißspannung:

Die Reißdehnung und Reißspannung wird gemäß der Norm DIN 53504 (S2) bestimmt.

### Gehalt an primären aromatischen Aminen (PAA):

Es wird die Zeit angegeben, die nach dem Verkleben der Folien abzuwarten ist, bis der Klebstoff als "im Wesentlichen migratfrei" gilt. Dies ist dann der Fall, wenn der Gehalt an primären aromatischen Aminen (PAA) geringer als 1,0 µg/100mL Füllgut ist. Als Füllgut bzw. Füllgutsimulanz wird 3%ige Essigsäure verwendet. Als Verpackung dient ein mittels des Klebstoffs hergestelltes OPA/PE-Laminat, welches durch Heißversiegelung das Füllgut umschließt, wobei die PE-Seite die Innenseite der Verpackung und die Innenseite der Siegelnaht bildet. Der Gehalt an primären aromatischen Aminen erfolgt mittels nach § 64 des Lebensmittel-, Bedarfsgegenstände- und Futtermittelgesetzbuches der Bundesrepublik Deutschland (LFGB) gemäß der Methode L 00.006.

### Verbundmaterialien:

OPA: orientiertes Polyamid
PE: Polyethylen
OPP: orientiertes Polypropylen
metOPP: metallisiertes OPP (OPP beschichtet mit Aluminium)

**Tabelle 1**

| | Beispiel 1 (erfindungsgemäß) | Beispiel 2 (erfindungsgemäß) | Beispiel 3 (Vergleichsbeispiel) | Beispiel 4 (Vergleichsbeispiel) |
|---|---|---|---|---|
| Verbund haftung in N/15 mm an OPA/PE | 4,1 | 5,0 | nicht messbar, es sind keine Laminate herstellbar | 5,0 |
| Verbundhaftung in N/15 mm an OPP/metOPP | 1,4 | 1,8 | nicht messbar, es sind keine Laminate herstellbar | 1,8 |
| Reißspannung in MPa | 8,5 | 12,0 | - | 5,5 |
| Reißdehnung in % | 400 | 350 | - | 400 |
| PAA Gehalt <1,0 µg/100ml | 6 Tage | 6 Tage | - | 8 Tage |
| Sedimentation / Phasenseparation | keine | keine | stark | - |
| Abrasivität an Kaschierwalzen | gering | gering | hoch | - |

## Patentansprüche

1. Kaschierklebstoff-Zusammensetzung auf Polyurethanbasis, insbesondere zum Kaschieren von Folien, enthaltend bezogen auf das Gesamtgewicht der Kaschierklebstoff-Zusammensetzung 10 bis 50 Gew.-% mindestens eines festen, partikulären Füllstoffs, **dadurch gekennzeichnet, dass**
(a) mindestens 90% der Füllstoffpartikel des mindestens einen Füllstoffs eine Partikelgröße von 4 µm oder weniger aufweisen; und
(b) der mindestens eine Füllstoff eine Mohs-Härte von 3 oder weniger besitzt.

2. Kaschierklebstoff-Zusammensetzung nach Anspruch 1 **dadurch gekennzeichnet, dass** der mindestens eine Füllstoff in einer Menge von 10 bis 40 Gew.-% bezogen auf das Gesamtgewicht der Kaschierklebstoff-Zusammensetzung enthalten ist.

3. Kaschierklebstoff-Zusammensetzung nach Anspruch 2 **dadurch gekennzeichnet, dass** der mindestens eine Füllstoff in einer Menge von 20 bis 30 Gew.-% bezogen auf das Gesamtgewicht der Kaschierklebstoff-Zusammensetzung enthalten ist.

4. Kaschierklebstoff-Zusammensetzung nach mindestens einem der Ansprüche 1 bis 3 **dadurch gekennzeichnet, dass** der mindestens eine Füllstoff eine Partikelgrößenverteilung x10 ≤ 0,3 µm, x50 ≤ 1,5 µm und x90 ≤ 4 µm aufweist.

5. Kaschierklebstoff-Zusammensetzung nach mindestens einem der Ansprüche 1 bis 4, **dadurch gekennzeichnet, dass** der mindestens eine Füllstoff eine Ölzahl von 50 oder weniger, vorzugsweise 40 oder weniger aufweist.

6. Kaschierklebstoff-Zusammensetzung nach mindestens einem der Ansprüche 1 bis 5, **dadurch gekennzeichnet, dass** der Füllstoff ausgewählt wird aus der Gruppe bestehend aus Calciumcarbonat, Calciumsulfat, Dolomit und Mischungen der vorgenannten.

7. Kaschierklebstoff-Zusammensetzung nach mindestens einem der Ansprüche 1 bis 6, **dadurch gekennzeichnet, dass** die Kaschierklebstoff-Zusammensetzung ein 2K-Polyurethan-Klebstoff ist und
(a) als Harzkomponente mindestens ein NCO-reaktives, insbesondere Hydroxy-terminiertes Polyurethanpräpolymer und als Härterkomponente mindestens ein Polyisocyanat enthält; oder
(b) als Harzkomponente mindestens ein NCO-terminiertes Polyurethanpräpolymer und als Härterkomponente mindestens ein Polyol enthält.

8. Kaschierklebstoff-Zusammensetzung nach Anspruch 7, **dadurch gekennzeichnet, dass** der Füllstoff entweder in der Harzkomponente oder der Härterkomponente, insbesondere in der Härterkomponente enthalten ist.

9. Kaschierklebstoff-Zusammensetzung nach mindestens einem der Ansprüche 1 bis 8, **dadurch gekennzeichnet, dass**
(a) die Zusammensetzung ferner mindestens einen Katalysator enthält, insbesondere ausgewählt aus Metallkatalysatoren auf Basis von Sn oder Ti oder Aminkatalysatoren; und/oder
(b) die Zusammensetzung bei einer Temperatur von 40°C eine Viskosität von 500 bis 100.000, insbesondere 1000 bis 20000 mPas aufweist; und/oder
(c) die Zusammensetzung einen Füllstoff mit einem Gehalt an Füllstoffpartikeln mit einer Partikelgröße ≤ 0,1 µm von maximal 5% bezogen auf den Füllstoff aufweist; und/oder
(d) die Zusammensetzung im Wesentlichen frei von organischen Lösungsmitteln ist.

10. Verwendung der Kaschierklebstoff-Zusammensetzung nach mindestens einem der Ansprüche 1 bis 9 zum Verkleben von Folien.

11. Verfahren zur Herstellung von Verbundfolien, **dadurch gekennzeichnet, dass** mindestens zwei gleiche oder unterschiedliche Kunststofffolien unter Verwendung einer Kaschierklebstoff-Zusammensetzung nach einem oder mehreren der Ansprüche 1 bis 9 teil- oder vollflächig verklebt werden.

12. Verfahren nach Anspruch 11, **dadurch gekennzeichnet, dass** die Kaschierklebstoffzusammensetzung in einer Menge von 1 bis 5 g/m² auf mindestens eine der zu verklebenden Oberflächen der zu verklebenden Folien aufgebracht wird.

13. Verbundfolie hergestellt nach dem Verfahren gemäß mindestens einem der Ansprüche 11 bis 12.

14. Verwendung einer Verbundfolie nach Anspruch 13 als Verpackung, insbesondere zur Verpackung von Arznei- oder Lebensmitteln.

## Claims

1. A polyurethane-based laminating adhesive composition, in particular for laminating films, containing, based on the total weight of the laminating adhesive composition, 10 to 50 wt.% of at least one solid, particulate filler, **characterized in that**
(a) at least 90% of the filler particles of the at least one filler have a particle size of 4 µm or less; and
(b) the at least one filler has a Mohs hardness of 3 or less.

2. The laminating adhesive composition according to claim 1, **characterized in that** the at least one filler is contained in an amount of from 10 to 40 wt.%, based on the total weight of the laminating adhesive composition.

3. The laminating adhesive composition according to claim 2, **characterized in that** the at least one filler is contained in an amount of from 20 to 30 wt.%, based on the total weight of the laminating adhesive composition.

4. The laminating adhesive composition according to at least one of claims 1 to 3, **characterized in that** the at least one filler has a particle size distribution of x10 ≤ 0.3 µm, x50 ≤ 1.5 µm and x90 ≤ 4 µm.

5. The laminating adhesive composition according to at least one of claims 1 to 4, **characterized in that** the at least one filler has an oil absorption value of 50 or less, preferably 40 or less.

6. The laminating adhesive composition according to at least one of claims 1 to 5, **characterized in that** the filler is selected from the group consisting of calcium carbonate, calcium sulfate, dolomite, and mixtures thereof.

7. The laminating adhesive composition according to at least one of claims 1 to 6, **characterized in that** the laminating adhesive composition is a 2K polyurethane adhesive and
(a) contains at least one NCO-reactive, in particular hydroxy-terminated, polyurethane prepolymer as a resin component and at least one polyisocyanate as a curing component; or
(b) contains at least one NCO-terminated polyurethane prepolymer as a resin component and at least one polyol as a curing component.

8. The laminating adhesive composition according to claim 7, **characterized in that** the filler is contained either in the resin component or in the curing component, in particular in the curing component.

9. The laminating adhesive composition according to at least one of claims 1 to 8, **characterized in that**
(a) the composition further contains at least one catalyst, in particular selected from metal catalysts based on Sn or Ti or amine catalysts; and/or
(b) the composition has a viscosity of 500 to 100,000 mPas, in particular 1,000 to 20,000 mPas, at a temperature of 40 °C; and/or
(c) the composition comprises a filler having a content of a maximum of 5%, based on the filler, of filler particles having a particle size of ≤ 0.1 µm; and/or
(d) the composition is substantially free of organic solvents.

10. The use of the laminating adhesive composition according to at least one of claims 1 to 9 for adhesively bonding films.

11. A method for producing composite films, **characterized in that** at least two identical or different plastics films are adhesively bonded over part or all of the surface using a laminating adhesive composition according to one or more of claims 1 to 9.

12. The method according to claim 11, **characterized in that** the laminating adhesive composition is applied to at least one of the surfaces to be adhesively bonded of the films to be adhesively bonded in an amount of 1 to 5 g/m².

13. A composite film produced by the method according to at least one of claims 11 to 12.

14. The use of a composite film according to claim 13 as packaging, in particular for the packaging of medicaments or foods.

## Revendications

1. Composition adhésive de contrecollage à base de polyuréthane, en particulier destinée au contrecollage de films, contenant, par rapport au poids total de la composition adhésive de contrecollage, 10 à 50 % en poids d'au moins un matériau de remplissage particulaire solide, **caractérisée en ce**
(a) **qu'**au moins 90 % des particules de matériau de remplissage de l'au moins un matériau de remplissage présentent une taille de particules de 4 µm ou moins ; et
(b) **que** l'au moins un matériau de remplissage possède une dureté Mohs de 3 ou moins.

2. Composition adhésive de contrecollage selon la revendication 1, **caractérisée en ce que** l'au moins un matériau de remplissage est contenu en une quantité de 10 à 40 % en poids par rapport au poids total de la composition adhésive de contrecollage.

3. Composition adhésive de contrecollage selon la revendication 2, **caractérisée en ce que** l'au moins un matériau de remplissage est contenu en une quantité de 20 à 30 % en poids par rapport au poids total de la composition adhésive de contrecollage.

4. Composition adhésive de contrecollage selon au moins l'une des revendications 1 à 3, **caractérisée en ce que** l'au moins un matériau de remplissage présente une distribution de taille de particules de x10 ≤ 0,3 µm, x50 ≤ 1,5 µm et x90 ≤ 4 µm.

5. Composition adhésive de contrecollage selon au moins l'une des revendications 1 à 4, **caractérisée en ce que** l'au moins un matériau de remplissage présente un indice d'huile de 50 ou moins, de préférence de 40 ou moins.

6. Composition adhésive de contrecollage selon au moins l'une des revendications 1 à 5, **caractérisée en ce que** le matériau de remplissage est choisi dans le groupe constitué par le carbonate de calcium, le sulfate de calcium, la dolomite et des mélanges de ceux-ci.

7. Composition adhésive de contrecollage selon au moins l'une des revendications 1 à 6, **caractérisée en ce que** la composition adhésive de contrecollage est un adhésif de polyuréthane 2K et
(a) qu'elle contient au moins un prépolymère de polyuréthane réactif avec NCO, en particulier terminé par des groupes hydroxy, comme composant de résine, et au moins un polyisocyanate comme composant durcisseur ; ou
(b) qu'elle contient au moins un prépolymère de polyuréthane terminé par NCO comme composant de résine et au moins un polyol comme composant durcisseur.

8. Composition adhésive de contrecollage selon la revendication 7, **caractérisée en ce que** le matériau de remplissage est contenu soit dans le composant de résine, soit dans le composant durcisseur, en particulier dans le composant durcisseur.

9. Composition adhésive de contrecollage selon au moins l'une des revendications 1 à 8, **caractérisée en ce que**
(a) la composition contient également au moins un catalyseur, en particulier choisi parmi des catalyseurs métalliques à base de Sn ou de Ti ou des catalyseurs aminés ; et/ou
(b) la composition présente, à une température de 40 °C, une viscosité de 500 à 100 000, en particulier de 1 000 à 20 000 mPas ; et/ou
(c) la composition présente un matériau de remplissage ayant une teneur en particules de matériau de remplissage ayant une taille de particules ≤ 0,1 µm de 5 % au plus par rapport au matériau de remplissage ; et/ou
(d) la composition est sensiblement exempte de solvants organiques.

10. Utilisation de la composition adhésive de contrecollage selon au moins l'une des revendications 1 à 9 pour coller des films.

11. Procédé de fabrication de films composites, **caractérisé en ce qu'**au moins deux films plastiques identiques ou différents sont collés sur leur surface partielle ou totale en utilisant une composition adhésive de contrecollage selon l'une ou plusieurs des revendications 1 à 9.

12. Procédé selon la revendication 11, **caractérisé en ce que** la composition adhésive de contrecollage est appliquée en une quantité de 1 à 5 g/m² sur au moins l'une des surfaces à coller des films à coller.

13. Film composite fabriqué par le procédé selon au moins l'une des revendications 11 à 12.

14. Utilisation d'un film composite selon la revendication 13 comme emballage, en particulier pour l'emballage de produits pharmaceutiques ou alimentaires.
